# EUROPÄISCHE PATENTSCHRIFT

(11) **EP 2 843 312 B1**
(45) Veröffentlichungstag und Bekanntmachung des Hinweises auf die Patenterteilung: **13.01.2016**
(21) Anmeldenummer: 14002464.7
(22) Anmeldetag: 16.07.2014
(51) Int. Cl.: F23N 5/12, F23N 5/20, F23N 5/24, F23Q 23/10, F02P 17/12, G01F 1/64, G01N 27/62

(54) **VERFAHREN ZUR BESTIMMUNG DES WARTUNGSZUSTANDS DER IONISATIONSELEKTRODEN EINER HEIZUNGSANLAGE**
METHOD FOR DETERMINING THE MAINTENANCE CONDITION OF THE IONISATION ELECTRODES OF A HEATING SYSTEM
PROCÉDÉ DE DÉTERMINATION DE L'ÉTAT DE MAINTENANCE DES ÉLECTRODES D'IONISATION D'UNE INSTALLATION DE CHAUFFAGE

(30) Priorität: 30.08.2013 DE 102013014379
(43) Veröffentlichungstag der Anmeldung: 04.03.2015
(73) Patentinhaber: Kübler GmbH, 67065 Ludwigshafen (DE)
(72) Erfinder: Kübler, Thomas, 68163 Mannheim (DE)
(74) Vertreter: Kesselhut, Wolf

(56) Entgegenhaltungen:
- EP-A2- 2 017 531
- DE-C1- 19 854 824

## Beschreibung

Die Erfindung betrifft ein Verfahren zur Bestimmung des Wartungszustands einer Heizungsanlage.

Mit dem Ziel einer möglichst effizienten Nutzung von Energie gelangen in zunehmendem Maße Strahlungsheizungsanlagen für die Erwärmung großer Räume wie zum Beispiel Hallen, zum Einsatz. Diese Anlagen erfüllen die primäre Heizaufgabe, ein Wohlbefinden für die sich im großen Raum befindenden Menschen oder anderen Lebewesen zu erzeugen, dadurch, dass diese einer von der Strahlungsheizungsanlage in den Raum ausgesandten Infrarot-Strahlung ausgesetzt werden. Da hierbei im Gegensatz zu konventionellen Heizungsanlagen nicht die Raumluft erwärmt und in Konvektion versetzt wird, benötigt eine Strahlungsheizungsanlage einen vergleichsweise geringeren Energiebedarf. Aus diesem Grunde kann die Solltemperatur eines durch eine Strahlungsheizung beheizten Raumes tendenziell niedriger als die Solltemperatur eines konventionell beheizten Raumes eingestellt werden, um bei Personen, die sich in dem Raum aufhalten, das gleiche Wohlbefinden zu erzielen.

In einer zuvor erwähnten Strahlungsheizungsanlage wird ein gasbetriebener Gebläsebrenner in der Regel in einem Arbeitspunkt mit voller Brennerleistung mit einem fest voreingestelltem Verhältnis von Luftmenge und Gasmenge betrieben, um einen möglichst optimalen feuerungstechnischen Wirkungsgrad und möglichst geringe unerwünschte Emissionen zu erzielen. Ist eine niedrigere Heizleistung als die maximale gewünscht, wird der Brenner getaktet oder intermittierend an- und abgestellt: Der Brenner wird eingeschaltet, heizt sich auf und gibt in der Regel 100% seiner Leistung ab. Über einen Regeleingriff, beispielsweise mit einer Temperaturmessung im Raum, wird der Brenner beim Erreichen einer gewünschten Solltemperatur wieder ausgeschaltet und beim Unterschreiten einer Mindesttemperatur wieder eingeschaltet. Während des Betriebs des Brenners kommt es hierbei auf den Elektroden zur Bildung von Ablagerungen, durch die sich der Wartungsaufwand für die Heizungsanlage erhöht.

Um bei den zuvor erwähnten Heizungsanlagen ein unbeabsichtigtes Erlöschen der Flamme zu erfassen und dadurch die Gefahr eines Ausströmens von unverbranntem Gas, bzw. die Gefahr einer Explosion des nachströmenden Luft-Brennstoffgemischs beim erneuten Zünden zuverlässig auszuschließen, ist es bekannt, den lonisationsstrom zwischen zwei von der Flamme beaufschlagten Ionisationselektroden durch eine Sicherheitseinrichtung zu erfassen, die in Fachkreisen auch als Feuerungsautomat bezeichnet wird. Fällt der von einem Flammwächter der Sicherheitseinrichtung erfasste Ionisationsstrom, der im Bereich von wenigen Mikroampere liegt, dabei für eine Zeitdauer, die einen gewissen Toleranzzeitraum von z.B. 1 s überschreitet, in welchem der Brenner zur Vermeidung von kurzzeitigen Signalschwankungen weiter betrieben wird, unter einen vorgegebenen Schwellenwert, so wird die Brennstoffzufuhr umgehend unterbrochen und ein Störungssignal ausgesandt. Dieses Störungssignal signalisiert einer zentralen Steuerungseinrichtung, dass es bei dem betreffenden Brenner zu einer Störung gekommen ist. Zuvor kann gegebenenfalls noch eine Nachzündung erfolgen, indem die Zündelektroden erneut kurzzeitig mit Hochspannung beaufschlagt werden. Wird nach einem solchen erneuten Zündversuch kein Anstieg des Ionisationsstroms zwischen den beiden Ionisationselektroden gemessen, so schaltet die Sicherheitseinrichtung die Brennstoffzufuhr bis zum Zurücksetzen der Sicherheitseinrichtung ab, um sicher zu stellen, dass kein Brennstoff nachströmt und unverbrannt austritt, bzw. sich sogar explosionsartig entzündet, wenn die Zündelektroden erneut mit Hochspannung beaufschlagt werden.

Aus der EP 1 300 632 B1 ist in diesem Zusammenhang beispielsweise ein Gasbrenner mit einer Flammenüberwachung bekannt, in welchem eine in die Flamme ragende Ionisationselektrode einen Ionisationsstrom zur Kennzeichnung des Betriebes des Gasbrenners abgibt. Der Ionisationsstrom wird als Messsignal einer Signalaufbereitungseinheit und einem Mikrokontroller zugeführt, wobei ein Verstärkungsfaktor während der Betriebsdauer zum sicheren Ansprechen der Signalaufbereitungseinheit erhöht wird.

Im Dokument EP 1 983 264 A2 wird eine Flammenüberwachungsvorrichtung mit einer Spannungserzeugungseinrichtung und einer Messeinrichtung beschrieben. Die Spannungserzeugungseinheit stellt eine Zündspannung für eine Zündvorrichtung eines Brenners und eine Ionisationsspannung für eine Ionisationselektrode bereit. Zum Überwachen der Flamme wird ein durch die Ionisationsspannung erzeugter Ionisationsstrom gemessen. Eine Steuereinheit erfasst eine dynamische Rückmeldung der Spannungs- und Messeinrichtung zum Erkennen einer Fehlfunktion.

Im Dokument DE 10 2009 057 121 A1 wird ein Verfahren zur fortlaufenden Überwachung eines Brennerzustands mittels einer Ionisationsflamme beschrieben, bei welchem die Flammenqualität aus der Wechselwirkung zwischen dem elektrischen Widerstand der Flamme und der variierenden Kesseltemperatur des Wärmetauschers bestimmt wird. Der Brenner kann durch einen Regelungsmechanismus auch zwischen den üblichen Wartungen und im diskontinuierlichen Betrieb in einem optimalen Arbeitsbereich des Luft-Kraftstoff-Verhältnisses gehalten werden, so dass mit einer Messung und Aufzeichnung der Daten des geregelten optimalen Arbeitspunktes der Wartungsbedarf der Heizungsanlange bestimmt werden kann.

Die DE 198 54 824 C1 beschreibt ein Verfahren zur Regelung eines Gasbrenners mittels einer Ionisationselektrode und eines dem Lambda-Wert der Verbrennung entsprechenden Ionisationssignals, bei dem ein zweites Ionisationssignal erzeugt wird, welches zur Kalibrierung dient

Im Dokument EP 2 017 531 A2 wird ein Verfahren zur Überprüfung des Ionisationselektrodensignals einer Ionisationselektrode eines Gasbrenners mit Gebläse mittels einer elektronischen Regelung beschrieben, welche zu einer vorgegebenen Brennerleistung ein Sollsignal für die Brenngasmenge und die Luftmenge vorgibt. Daneben wird eine Einrichtung zur Regelung der Brenngasmenge mit einem Abgassensor offenbart, die ein der Kohlenmonoxid-Konzentration oder Konzentration an unverbrannten Kohlenwasserstoffen äquivalentes Signal erzeugt, wobei das Brenngas-Luftgemisch soweit angefettet wird, bis der Abgassensor ein Signal erfasst, das alleine oder in Verbindung mit mindestens einem weiteren Signal einem vorgegebenen oder errechneten Schwellwert entspricht. Zu diesem Zustand wird das Ionisationselektrodensignal einer Ionisationselektrode erfasst und mit einem Referenzwert oder mit mindestens einem zuvor hinterlegten Messwert verglichen, wobei in dem Fall, dass das Ionisationselektrodensignal den Referenzwert unterschreitet oder mindestens einen früheren Messwert wesentlich unterschreitet, ein Warnhinweis ausgegeben wird.

Die zuvor genannten Dokumente geben keinen Hinweis darauf, nach der Einleitung eines ordnungsgemäßen Abschaltvorgangs innerhalb einer vorgegebenen Zeitdauer die Leitungsverbindung zwischen einer Ionisationselektrode und einer Sicherheitseinrichtung zu unterbrechen und eine Messeinrichtung mit der Ionisationselektrode zu verbinden, um den Stromfluss durch die Ionisationselektrode zu messen.

Ein weiteres Problem der in Verbindung mit den bei Gasbrennern von Strahlungsheizungsanlagen eingesetzten Sicherheitseinrichtungen, die auch als Feuerungsautomaten bezeichnet werden, besteht darin, dass diese abgeschlossene autarke Systeme darstellen, in die zum Ausschluss der bestehenden Explosionsgefahr von außen her nicht eingegriffen werden darf. Die Sicherheitseinrichtungen werden dabei zum Einschalten des Brenners durch eine zugeordnete Steuerungseinrichtung, z.B. über einen entsprechenden elektronisch gesteuerten Schalter oder ein Relais, lediglich mit einer Stromquelle verbunden, und zum Abschalten des Brenners wieder von dieser getrennt. Die Stromquelle ist dabei bevorzugt eine 230 V 50 Hz Wechselstromquelle.

Um die hohen Sicherheitsanforderungen beim Betrieb der gasbetriebenen Strahlungsheizungen einzuhalten, ist es dem Hersteller und Betreiber von derartiger Anlagen nicht gestattet, an den Sicherheitseinrichtungen schaltungstechnische Veränderungen vorzunehmen, mit denen sich z.B. der erfasste Ionisationsstrom als Wert direkt auslesen lässt. Der Wert für den Ionisationsstrom nimmt mit steigender Verschmutzung ab und ist daher ein Maß für den Wartungszustand der Ionisationselektrode. Zudem scheidet eine Messung des Ionisationsstroms durch einen direkten Abgriff an den Ionisationselektroden deshalb aus, da der von der Sicherheitseinrichtung erfasste Wert für den Ionisationsstrom durch einen solchen Messeingriff selbst abgesenkt und dadurch der Wert verfälscht, bzw. unter den Schwellenwert abgesenkt wird.

Demgemäß ist es eine Aufgabe der vorliegenden Erfindung, ein Verfahren zu schaffen, mit welchem sich der Wartungszustand eines gasbetriebenen Brenners einer Strahlungsheizung, dessen Flamme durch eine Sicherheitseinrichtung überwacht wird, welche den Stromfluss zwischen zwei Ionisationselektroden erfasst, mit hoher Genauigkeit und ohne einen schaltungstechnischen Eingriff an der Sicherheitseinrichtung selbst ermitteln lässt.

Diese Aufgabe wird erfindungsgemäß durch ein Verfahren mit den Merkmalen von Anspruch 1 gelöst. Vorteilhafte Weiterbildungen der Erfindung sind in den abhängigen Ansprüchen enthalten.

Gemäß der Erfindung zeichnet sich ein Verfahren zur Bestimmung des Wartungszustands einer Heizungsanlage, die einen Brenner zur chemischen Umsetzung von Gas in einer Flamme umfasst, die durch eine Sicherheitseinrichtung überwacht wird, welche den Stromfluss zwischen zwei von der Flamme beaufschlagten Ionisationselektroden erfasst und den Brenner selbständig abschaltet, wenn der erfasste Stromfluss unterhalb eines vorgegebenen Schwellenwerts liegt, dadurch aus, dass die elektrische Leitungsverbindung zwischen einer der Ionisationselektroden und der Sicherheitseinrichtung eine vorgegebene Zeitdauer, vorzugsweise weniger als 1 Sekunde, vor dem Trennen der Sicherheitseinrichtung von der elektrischen Stromquelle unterbrochen und im Anschluss daran der Stromfluss zwischen den Ionisationselektroden durch eine elektronische Messanordnung bis zum Erlöschen der Flamme gemessen wird. Die Höhe des gemessenen Stromflusses ist bei einer vorgegebenen Spannung dabei ein direktes Maß für die Schichtdicke der Ablagerungen und Verbrennungsrückstände auf den Ionisationselektroden und damit ein Maß für den Wartungszustand des Brenners.

Bevorzugt wird der Stromfluss zwischen den Ionisationselektroden über ein in Reihe mit den Elektroden geschaltetes Messgerät erfasst. Wie bereits zuvor erwähnt wurde, ist eine Messung des Ionisationsstroms in den bekannten Brennern durch einen direkten Anschluss einer elektronischen Messanordnung nicht möglich, da hierdurch der bei entzündeter Flamme fließende Ionisationsstrom verringert würde. Dies würde aufgrund der hohen Empfindlichkeit der Flammenwächter in den bekannten Sicherheitseinrichtungen dazu führen, dass der Sicherheitseinrichtung ein Erlöschen der Flamme signalisiert würde, woraufhin diese die Brennstoffzufuhr umgehend durch Schließen des Gasmagnetventils unterbrechen und ein Störsignal ausgeben würde. Als Folge wäre dann ein Zurücksetzen der Sicherheitseinrichtung erforderlich, was in der Regel mit einer unerwünschten Betriebsunterbrechung des betreffenden Brenners verbunden ist.

Um dies zu vermeiden und dennoch die hohen sicherheitstechnischen Anforderungen an die Sicherheitseinrichtung zu erfüllen, wird bei dem erfindungsgemäßen Verfahren die elektrische Leitungsverbindung zwischen einer der Ionisierungselektroden und der Sicherheitseinrichtung unterbrochen und gleichzeitig oder eine kurze Zeit, z.B. 10 ms später, eine elektrische Leitungsverbindung zwischen den beiden Ionisierungselektroden und den Messanschlüssen einer bekannten elektronischen Messanordnung hergestellt.

Diese misst dann den Ionisationsstrom bei brennender Flamme für eine vorgegebene Zeitdauer von vorzugsweise weniger als 1 Sekunde. Nach Ablauf dieser vorgegebenen Zeitdauer wird die Stromzufuhr zur Sicherheitseinrichtung durch die zugeordnete Steuerungseinrichtung unterbrochen, wodurch das strombetätigte Gasmagnetventil geschlossen wird und die Flamme in kürzester Zeit erlischt. Das zuvor beschriebene Verfahren wird dabei in erfindungsgemäßer Weise während der Abschaltphase des Brenners durchgeführt, d.h. wenn insbesondere die gewünschte Solltemperatur des zu beheizenden Raums erreicht wurde, oder der Brenner ohnehin abgeschaltet werden soll, z.B. weil der Raum tageszeitbedingt, z.B. tagsüber, nicht mehr beheizt werden soll.

Durch den erfindungsgemäßen Verfahrensablauf ergibt sich der Vorteil, dass der Ionisationsstrom unter Beibehaltung der hohen sicherheitstechnischen Erfordernisse mit einer sehr hohen Genauigkeit erfasst werden kann, was überhaupt erst eine hinreichende Aussage über den Wartungszustand sowie die Ermittlung eines Zeitpunkts für eine Reinigung oder einen Austausch der Elektroden erlaubt.

Hierbei stellt es einen besonderen Vorteil dar, dass die benötigte Zeitdauer zwischen der Unterbrechung der elektrischen Leitungsverbindung zwischen der Sicherheitseinrichtung und den Ionisierungselektroden sowie dem Messen des lonisationsstorms weniger als bevorzugt einer Sekunde beträgt, da der Brenner während dieser Zeitdauer in einem sicherheitsunkritischen Betriebszustand betrieben wird. Dies ist dadurch begründet, dass die Sicherheitseinrichtung das Gasmagnetventil mit einer zeitlichen Verzögerung von ca. 1 Sekunde nach dem Wegfall des Ionisationsstroms schließt, so dass ein zufälliges störungsbedingtes Erlöschen der Flamme nach dem oder mit dem Unterbrechen der Leitungsverbindung zwischen den Elektroden und der Sicherheitseinrichtung im schlimmsten Falle dazu führt, dass das unverbrannte Gas-Luftgemisch für längstens 1 Sekunde nachströmt. Da sich in dieser kurzen Zeitdauer keine gefahrdrohende Menge an explosionsfähigem Gemisch bildet, entsteht auch im Falle eines Nachzündens des Gas-Luftgemischs durch die Sicherheitseinrichtung keine zusätzliche Explosionsgefahr.

Da sich durch den Einsatz des erfindungsgemäßen Verfahrens eine Qualitätsaussage über die Verschmutzung der Zündelektroden und/oder der Ionisierungselektroden treffen lässt, wird die Möglichkeit eröffnet, die Länge des Wartungsintervalls, d.h. die Zeit bis zu einer nächsten notwendigen Wartung eine generelle Aussage darüber zu treffen, ob die Elektroden bereits zu tauschen sind oder ob sie beispielsweise noch eine Heizperiode überstehen. Ein unkontrollierter Ausfall des Brenners wird damit verhindert und eine Planbarkeit von Wartungseingriffen möglich.

Ein weiterer Vorteil, der sich durch den Einsatz des erfindungsgemäßen Verfahrens ergibt, besteht darin, dass es über die Qualitätsaussage des Verschmutzungsgrades möglich wird, den Brenner außerhalb des Arbeitspunktes mit verringerter Leistung zu betreiben. Daher erfolgt die Anwendung des erfindungsgemäßen Verfahrens auch in einem Betriebszustand der Heizungsanlage, in welchem der Brenner mit reduzierter Brennerleistung moduliert betrieben wird.

Nach einem weitern der Erfindung zugrunde liegenden Gedanken erfolgt das Unterbrechen der elektrischen Leitungsverbindung zwischen der Sicherheitseinrichtung und der Ionisationselektrode in gleicher Weise wie das Herstellen der elektrischen Leitungsverbindung zwischen der Messanordnung und der oder den Ionisationselektroden innerhalb eines Zeitraums, der kleiner als ein Toleranzzeitraum ist, in welchem der Brenner weiter betrieben wird, wenn der von der Sicherheitseinrichtung erfasste Ionisationsstrom den Schwellenwert unterschreitet. Ein solcher Toleranzzeitraum, der z.B. einige ms bis zu 1 Sekunde beträgt, wird bei den bekannten Sicherheitseinrichtungen/Feuerungsautomaten dazu eingesetzt, dass eine kurzzeitige Schwankung des gemessenen Ionisationsstroms, welche z.B. durch einen Hochspannungseinschaltimpuls eines benachbarten Brenners oder einer sonstigen elektromagnetischen Quelle bei laufender Flamme zwischen den Elektroden induziert werden kann, nicht zu einem Ansprechen der Sicherheitseinrichtung und dadurch zu einer Notabschaltung der Brennstoffzufuhr führt. Eine solche Notabschaltung, die z.B. bei einem störungsbedingten Erlöschen der Flamme während des normalen Betriebs des Brenners zur Vermeidung von Explosionen eingeleitet wird, erfordert in der Regel einen Neustartvorgang, bei dem z.B. Prüfroutinen ausgeführt werden, die das Vorliegen eines tatsächlichen Fehlers ausschließen.

Bei der bevorzugten Ausführungsform der Erfindung werden das Unterbrechen der elektrischen Leitungsverbindung zwischen der Sicherheitseinrichtung und der Ionisationselektrode und das Trennen der Sicherheitseinrichtung von der elektrischen Stromquelle innerhalb des vorgegebenen Zeitraums durch die Steuerungseinrichtung gesteuert, die hierzu bevorzugt einen Mikroprozessor enthält.

Die Steuerungseinrichtung ist dazu vorzugsweise mit einem elektrischen Relais oder einem sonstigen elektrisch betätigten Schalter verbunden, der in seiner einen Schaltstellung die Sicherheitseinrichtung elektrisch leitend mit wenigstens einer der beiden Ionisationselektroden verbindet. Durch ein von der Steuerungseinrichtung veranlasstes Umschalten des Relais in die andere Schaltstellung wird ca. 1 Sekunde vor der Unterbrechung der Stromzufuhr zur Sicherheitseinrichtung die elektrische Leitungsverbindung zwischen den Ionisationselektroden und der Sicherheitseinrichtung unterbrochen und ausschließlich die elektronische Messanordnung mit den Ionisationselektroden verbunden, welche sodann den Ionisationsstrom zwischen den beiden Elektroden vorzugsweise bis zum Abschalten der Brennstoffzufuhr misst.

Bei der bevorzugten Ausführungsform des erfindungsgemäßen Verfahrens wird der zwischen dem Anschluss der Messanordnung an die Ionisationselektroden und dem Trennen der Sicherheitseinrichtung von der Stromversorgung gemessene Wert für den Ionisationsstrom, insbesondere als gemittelter Wert an eine zentrale Steuerungseinrichtung übersandt, um diese als absoluten Zahlenwert und/oder zusammen mit zuvor übersandten und abgespeicherten Werten für den Ionisationsstrom auf einer Anzeige wieder zugegeben. Gleichzeitig oder alternativ kann der digitale Mittelwert oder auch eine daraus abgeleitete Größe von der zentralen Steuerungseinrichtung über ein bekanntes Datennetzwerk an einen entfernten Rechner übersandt werden, um dem Hersteller oder Wartungspersonal die Möglichkeit zu eröffnen, die gemessenen Werte für den Ionisationsstrom mit Vergleichswerten zu vergleichen, und daraus den Wartungszustand, bzw. den voraussichtlichen Zeitpunkt für den nächsten Wartungsdienst zu ermitteln.

Gleichzeitig oder alternativ besteht die Möglichkeit, dass der an die zentrale Steuerungseinrichtung übersandte Wert für den Ionisationsstrom mit einem abgespeicherten, insbesondere empirisch ermittelten Vergleichswert verglichen wird, welcher ein Maß für den Verschleißzustand der Ionisationselektroden ist, und anhand der Differenz zwischen dem übersandten Wert und dem abgespeicherten Vergleichswert ein voraussichtlicher Wartungszeitpunkt oder Reinigungszeitpunk für die Ionisationselektroden bestimmt wird.

Nach einem weiteren der Erfindung zugrunde liegenden Gedanken weist der Brenner eine vorzugsweise auf Erdpotential liegende erste Zündelektrode sowie eine mit elektrischer Hochspannung beaufschlagte zweite Zündelektrode zum Zünden des Gas-Luftgemischs auf, und die Ionisationselektroden zum Messen des Ionisationsstroms umfassen die erste, vorzugsweise auf Erdpotential liegende Zündelektrode und eine dritte Messelektrode, zwischen denen von der Messanordnung eine gegenüber der Zündspannung geringe Spannung von einigen Volt angelegt wird, um den Ionisationsstrom nach dem Trennen des Flammwächters der Sicherheitseinrichtung von der dritten Messelektrode mit hoher Genauigkeit zu messen.

Hierdurch ergibt sich der Vorteil, dass die elektronische Messanordnung in schaltungstechnischer Hinsicht einfacher ausgestaltet und auf teure hochspannungsfeste Elektronikbauteile verzichtet werden kann.

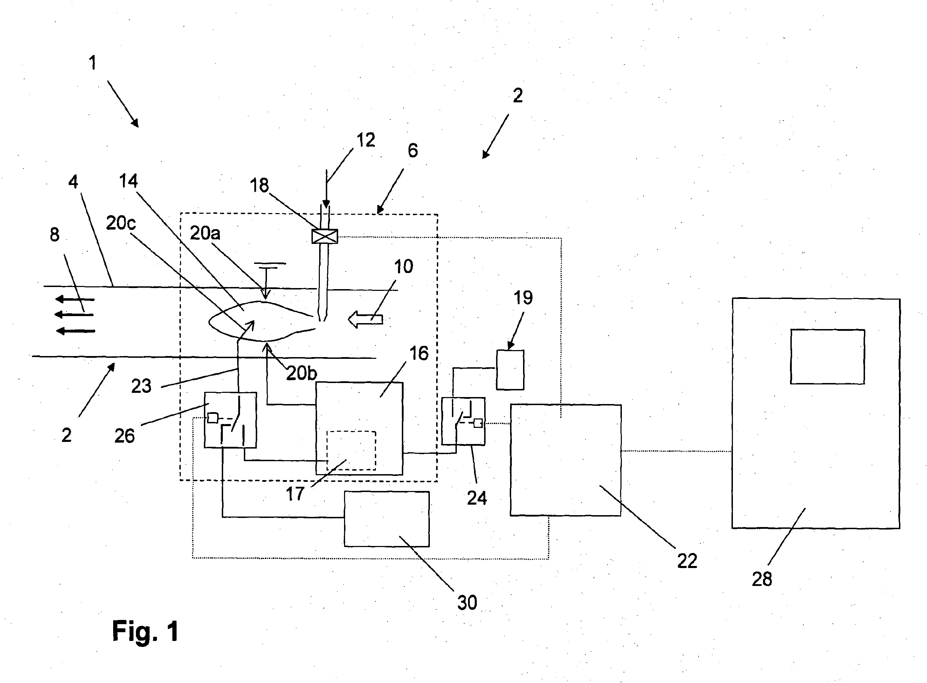

Weitere Vorteile und eine vorteilhafte Ausführungsform mit Weiterbildungen der Erfindung werden anhand der nachfolgenden Beschreibung unter Bezugnahme auf die Figur 1 dargestellt.

Wie der Darstellung von Figur 1 entnommen werden kann, umfasst eine erfindungsgemäße Heizungsanlage 1 zur Durchführung des zuvor beschriebenen erfindungsgemäßen Verfahrens einen lediglich schematisch angedeuteten Dunkelstrahler 2, der ein Strahlungsrohr 4 besitzt, dass durch einen Brenner 6 mit heißem Abgas 8 beaufschlagt wird, welches durch Vermischen von angesaugter Luft 10 mit zugeführtem Gas 12 und Verbrennen des erzeugten Gas-Luftgemischs in einer Flamme 14 bereitgestellt wird. Der Brenner 6 ist mit einer bekannten Sicherheitseinrichtung 16 verbunden, die in Fachkreisen auch als Feuerungsautomat bezeichnet wird, und die eine abgeschlossene autarke Einheit bildet, welche unter anderem das Öffnen und Schließen des schematisch angedeuteten Gasmagnetventils 18 sowie das Zünden des entstehenden Gas-Luftgemischs über eine erste Elektrode 20a und eine zweite schematisch angedeutete Zündelektrode 20b selbständig steuert. Durch die Sicherheitseinrichtung 16 wird hierbei sichergestellt, dass im Falle eines störungsbedingten Erlöschens der Flamme 14 das Gasmagnetventil 18 umgehend geschlossen wird, um ein Nachströmen von Gas 12 zu verhindern und hierdurch das Einströmen von unverbranntem Gas-Luftgemisch in das Strahlungsrohr 4 zu vermeiden, welches im Falle eines erneuten Zündens eine folgenschwere Explosion des gesamten Strahlungsrohres 4 zur Folge hätte. Ebenso wird dadurch sicher gestellt, dass aus dem Brenner austretendes unverbranntes Gas sich nicht langsam im Gebäude verteilt und dort explodieren kann.

Wie der Darstellung von Figur 1 weiterhin entnommen werden kann, umfasst die Sicherheitseinrichtung 16 einen schematisch angedeuteten Flammenwächter 17, welcher in bekannter Weise den Ionisationsstrom in der Flamme 14 zwischen der ersten Elektrode 20a und einer weiteren Ionisationselektrode 20c erfasst und für den Fall, dass der Ionisationsstrom einen vorgegebenen Schwellenwert unterschreitet, umgehend das Gasmagnetventil 18 abschaltet, bzw. alternativ innerhalb kürzester Zeit eine Nachzündung des Gas-Luftgemischs durch Anlegen einer Hochspannung zwischen der ersten Elektrode 20a und der zweiten Elektrode 20b veranlasst. Sofern sich in einem solchen Störungsfall innerhalb kürzester Zeit nicht erneut ein messbarer Ionisationsstrom einstellt, wird das Gasmagnetventil 18 vollständig geschlossen und eine Störabschaltung durchgeführt, welche in der Regel ein manuelles Zurücksetzen der Sicherungseinrichtung 16 erfordert. Die Sicherheitseinrichtung 16 wird bei der bevorzugten Ausführungsform in der Weise betrieben, dass über eine zugeordnete Steuerungseinrichtung 22 ein elektrischer Schalter 24 betätigt wird, beispielsweise ein angedeutetes Relais, welches die Sicherheitseinrichtung 16 und den Brenner 6 mit einer elektrischen Stromquelle 19, bevorzugt dem 230V Wechselspannungssatz, verbindet, wie dies schematisch in Figur 1 angedeutet ist. Der durch das Relais angedeutete elektrische Schalter 24 kann jedoch auch als elektronisches Bauteil in der Steuerungseinrichtung 22 integriert sein. Die Steuerungseinrichtung 22 wird hierbei über ein Datenbussystem bevorzugt durch eine zentrale Steuerungseinrichtung 28 gesteuert, welche bevorzugt weitere, nicht näher dargestellte Dunkelstrahler- Einheiten ansteuert.

Wie der Darstellung der Figur 1 weiterhin entnommen werden kann, ist in der elektrischen Zuleitung 23 von der Ionisationselektrode 20c zum Flammwächter 17 ein weiterer elektrischer Schalter bevorzugt in Form eines Relais 26 angeordnet, welches durch die Steuerungseinrichtung 22 angesteuert wird. Der weitere elektrische Schalter 26 kann dazu auch als elektronisches Bauteil in die Steuerungseinrichtung 22 integriert sein, was aus darstellungstechnischen Gründen in der Fig. 1 jedoch nicht näher gezeigt ist. Während des ordnungsgemäßen Betriebs des Dunkelstrahlers 2 wird das Relais 26 von der Steuerungseinrichtung 22 so geschaltet, dass die Ionisationselektrode/ Messelektrode 20c mit dem Eingang des Flammwächters 17 der Sicherheitseinrichtung verbunden ist, so dass der Flammwächter 17 den durch die brennende Flamme 14 erzeugten Ionisationsstrom zwischen der ersten Elektrode 20a, die in diesem Falle die eine der beiden Ionisationselektroden bildet, und der Ionisationselektrode 20c misst. Hierzu wird das Relais 26 von der Steuerungseinrichtung so geschaltet, dass die Sicherheitseinrichtung und auch die übrigen Bauteile mit dem Stromanschluss 19, d.h. insbesondere der Phase des Wechselspannungsstromnetzes, verbunden sind.

Sollte in diesem normalen Betriebszustand eine Störung auftreten, beispielsweise ein kurzzeitiger Abfall des Gasdrucks, der zu einem Erlöschen der Flamme 14 führt, so fällt der vom Flammwächter 17 gemessene Ionisationsstrom zwischen den Elektroden 20a und 20c unter einen vorgegebenen Schwellenwert ab, und die interne Elektronik der Sicherheitseinrichtung veranlasst innerhalb einer Zeitdauer von ca. 1 Sekunde ein Schließen des Gasmagnetventils 18, sodass kein weiteres Gas nachströmen kann.

Um den Alterungszustand der Elektroden 20a, 20b und 20c, auf welchen sich durch die Verbrennungsrückstände im Abgas 8 Ablagerungen ablagern, die elektrisch isolierend wirken und dadurch im Laufe der Zeit zu einer Verschlechterung des Zündvorgangs führen, zu bestimmen, ist der weitere Ausgang des elektronischen Umschalters/Relais 26 mit einer elektronischen Messanordnung 30 verbunden. Die Messanordnung 30, die ebenfalls in die Steuerungseinrichtung 22 integriert sein kann, wird eine vorgegebene Zeitdauer, bevorzugt 1 Sekunde oder weniger, vor dem Unterbrechen der elektrischen Leitungsverbindung 24 zum Stromanschluss 19 durch Umschalten des Relais 26 mit der Ionisationselektrode 20c verbunden, woraufhin die Messanordnung die Elektroden 20a und 20c in bekannter Weise mit einer Spannung beaufschlagt und den Ionisationsstrom zwischen der Ionisationselektrode 20c und der ersten Elektrode 20a erfasst. Der erfasste Wert für den Ionisationsstrom wird dann beispielsweise über das nicht näher gezeigte Bussystem an die Steuerungseinrichtung 22, bzw. von dieser an die zentrale Steuerungseinrichtung 28 übersandt, die beispielsweise ein nicht näher bezeichnetes Display aufweisen kann, auf welchem der erfasste Wert für den von der Messanordnung 16 gemessenen lonisationsstrom ausgegeben wird.

Die zentrale Steuerungseinrichtung 28 enthält bevorzugt einen Mikroprozessor, der gemäß einer weiteren Ausführungsform der Erfindung den erfassten digitalen Wert für den Ionisationsstrom mit einem oder mehreren darin abgelegten Vergleichswerten vergleichen kann, welcher zuvor bevorzugt empirisch ermittelt wurde und welcher ein Maß für den Wartungszustand der Ionisationselektroden 20a, 20c bzw. der Zündelektroden 20a und 20b darstellt, da diese allesamt im Wesentlichen gleichförmig von ein und derselben Flamme 14 beaufschlagt werden.

Um beim Anschluss der Messanordnung 16 an die Ionisationselektrode 20c eine Notabschaltung des Brenners 6 durch die Sicherheitseinrichtung 16 zu vermeiden, erfolgt das Umschalten durch den elektronischen Schalter, bzw. das Relais 26 in vorteilhafter Weise innerhalb von 1 Sekunde nach der Einleitung eines ordnungsgemäßen Abschaltvorgangs des betreffenden Brenners. Dieser wird insbesondere dann eingeleitet, wenn der gewünschte Temperatur-Sollwert erreicht wurde. Dieser wird von der zentralen Steuerungseinrichtung 28 in bekannter Weise über einen oder mehrere nicht näher dargestellte Sensoren innerhalb des beheizten Raumbereichs erfasst, die dann einen entsprechenden Abschaltbefehl an die jeweilige Steuerungseinrichtung 22 über das Datenbussystem übersendet. Nach Ablauf der vorgegebenen, bevorzugt auch einstellbaren Zeitdauer von weniger als einer Sekunde nach dem Auftrennen der elektrischen Leitungsverbindung 23 zwischen dem Flammenwächter 17 und der Ionisationselektrode 20c und Schließen der elektrischen Leitungsverbindung zwischen der Ionisationselektrode 20c und der Messanordnung 16 wird dann von der Steuerungseinrichtung 22 der elektrische Schalter, bzw. das Relais 24 umgeschaltet und dadurch die Sicherheitseinrichtung 16 vom Stromanschluss 19 getrennt. Hierdurch wird erreicht, dass das Gasmagnetventil 18 umgehend geschlossen wird und die Flamme erlischt.

### BEZUGSZEICHENLISTE

- 1: Erfindungsgemäße Heizungsanlage
- 2: Dunkelstrahler
- 4: Strahlungsrohr
- 6: Brenner
- 8: Heißes Abgas
- 10: Angesaugte Luft
- 12: Zugeführtes Gas
- 14: Flamme
- 16: Sicherheitseinrichtung/ Feuerungsautomat
- 17: Flammenwächter in Sicherungseinrichtung
- 18: Gasmagnetventil
- 19: Elektrische Stromquelle/230Volt Stromanschluss
- 20a: Erste Elektrode Ionisationselektrode/Zündelektrode
- 20b: Zweite Elektrode/Zündelektrode
- 20c: Weitere Elektrode Ionisationselektrode/Messelektrode
- 22: Steuerungseinrichtung für den Brenner
- 23: Elektrische Leitungsverbindung
- 24: Elektrischer Schalter/Relais zum Unterbrechen der Stromversorgung
- 26: Elektrischer Umschalter/Relais
- 28: Zentrale Steuerungseinrichtung
- 30: Elektronische Messanordnung

## Patentansprüche

1. Verfahren zur Bestimmung des Wartungszustands einer Heizungsanlage (1), die einen Brenner (6) zur chemischen Umsetzung von Gas in einer Flamme umfasst, welche durch eine Sicherheitseinrichtung (16) überwacht wird, die den Stromfluss zwischen zwei von der Flamme (14) beaufschlagten Ionisationselektroden (20a, 20c) erfasst und den Brenner (6) selbständig abschaltet, wenn der erfasste Stromfluss unterhalb eines vorgegebenen Schwellenwerts liegt, wobei die Sicherheitseinrichtung (16) durch eine Steuerungseinrichtung (22) angesteuert wird, welche die Sicherheitseinrichtung (16) zum Einschalten des Brenners (6) mit einer elektrischen Stromquelle (19) verbindet und zum Ausschalten des Brenners (6) von dieser trennt, wobei
die elektrische Leitungsverbindung (23) zwischen einer der Ionisationselektroden (20c) und der Sicherheitseinrichtung (16) eine vorgegebene Zeitdauer vor dem Trennen der Sicherheitseinrichtung (16) von der elektrischen Stromquelle (19) unterbrochen und der Stromfluss zwischen den Ionisationselektroden (20a, 20c) im Anschluss daran durch eine elektronische Messanordnung (30) gemessen wird.

2. Verfahren nach Anspruch 1, wobei
das Unterbrechen der elektrischen Leitungsverbindung (23) zwischen der Sicherheitseinrichtung (16) und einer der Ionisationselektrode (20c) und das Anschließen der Messanordnung (30) an die Ionisationselektroden (20c) innerhalb von 1 Sekunde nach der Einleitung eines ordnungsgemäßen Abschaltvorgangs des betreffenden Brenners (6) erfolgt.

3. Verfahren nach Anspruch 1 oder 2, wobei
das Unterbrechen der elektrischen Leitungsverbindung (23) zwischen der Sicherheitseinrichtung (16) und einer der Ionisationselektroden (20c) und das Trennen der Sicherheitseinrichtung (16) von der elektrischen Stromquelle (19) innerhalb des vorgegebenen Zeitraums durch die Steuerungseinrichtung (22) gesteuert wird.

4. Verfahren nach einem der Ansprüche 1 bis 3, wobei
das Trennen der Sicherheitseinrichtung (16) von der elektrischen Stromquelle (19) und das Anschließen der Messanordnung (30) an die Ionisationselektroden (20a, 20c) durch Umschalten eines elektrischen Umschalters, insbesondere eines Relais (24), erfolgt.

5. Verfahren nach einem der vorhergehenden Ansprüche, wobei
der zwischen dem Anschluss der Messanordnung (30) an die Ionisationselektroden (20a, 20c) und dem Trennen der Sicherheitseinrichtung (16) von der Stromversorgung (19) gemessene Wert für den Ionisationsstrom insbesondere als gemittelter Wert an eine zentrale Steuerungseinrichtung (28) übersandt wird.

6. Verfahren nach Anspruch 5, wobei
der an die zentrale Steuerungseinrichtung (28) übersandte Wert für den Ionisationsstrom als absoluter Zahlenwert und/oder zusammen mit zuvor übersandten und abgespeicherten Werten für den lonisationsstrom auf einer Anzeige wieder gegeben wird.

7. Verfahren nach Anspruch 5, wobei
der an die zentrale Steuerungseinrichtung (28) übersandte Wert für den Ionisationsstrom mit einem abgespeicherten, insbesondere empirisch ermittelten Vergleichswert für den Verschleißzustand der Ionisationselektroden (20a, 20c) verglichen und anhand der Differenz zwischen dem übersandten Wert und dem abgespeicherten Vergleichswert ein voraussichtlicher Wartungszeitpunkt oder Reinigungszeitpunkt für die Ionisationselektroden (20a, 20c) und oder Zündelektroden (20a, 20b) bestimmt wird.

8. Verfahren nach einem der vorhergehenden Ansprüche, wobei
der Brenner (6) mit reduzierter Brennerleistung moduliert betrieben und der Ionisationsstrom insbesondere bei jedem Abschalten des Brenners (6) gemessen und mit einem Vergleichswert verglichen wird,

9. Verfahren nach einem der vorhergehenden Ansprüche, wobei
der Brenner (6) eine erste, insbesondere auf Erdpotential liegende, Zündelektrode (20a) und eine zweite Hochspannung führende Zündelektrode (20b) aufweist, und dass die Ionisationselektroden (20a, 20c) zum Messen des Ionisationsstroms die erste Zündelektrode (20a) und eine weitere Messelektrode (20c) umfassen, mit welchen die Messanordnung (30) verbunden wird.

## Claims

1. Method for determining the maintenance condition of a heating system (1), comprising a burner (6) for the chemical conversion of gas in a flame, which is monitored by a safety means (16), recording the current flow between two ionisation electrodes (20a, 20c) supplied by the flame (14) and switching off the burner (6) independently when the recorded current flow lies below a pre-determined threshold value, whereby the safety means (16) is controlled by a controller (22) that connects the safety means (16) with an electric current source (19) for switching on the burner (6) and separates it from the same for switching off the burner (6),
whereby
the electric cable connection (23) is interrupted between one of the ionisation electrodes (20c) and the safety means (16) for a pre-determined time period prior to separating the safety means (16) from the electric current source (19), and the current flow between the ionisation electrodes (20a, 20c) is then measured by means of an electronic measuring arrangement (30).

2. Method according to claim 1, whereby
the interruption of the electric cable connection (23) between the safety means (16) and one of the ionisation electrodes (20c) and the connection of the measuring arrangement (30) with the ionisation electrode (20c) occur within 1 second from initiating a correct switching-off process of the burner (6) in question.

3. Method according to claim 1 or 2, whereby
the interruption of the electric cable connection (23) between the safety means (16) and one of the ionisation electrodes (20c) and the separation of the safety means (16) from the electric current source (19) is controlled within the pre-determined time period by the controller (22).

4. Method according to one of the claims 1 to 3, whereby
the separation of the safety means (16) from the electric current source (19) and the connection of the measuring arrangement (30) with the ionisation electrodes (20a, 20c) is realised by switching over an electric switchover, in particular a relay (24).

5. Method according to one of the preceding claims, whereby
the value measured for the ionisation current between the connection of the measuring arrangement (30) with the ionisation electrodes (20a, 20c) and the separation of the safety means (16) from the current supply (19) is transmitted to a central controller (28), in particular as an averaged value.

6. Method according to claim 5, whereby
the value for the ionisation current transmitted to the central controller (28) is reproduced on a display as an absolute numerical value and/or together with previously transmitted and stored values for the ionisation current.

7. Method according to claim 5, whereby
the value for the ionisation current transmitted to the central controller (28) is compared with a stored, in particular empirically determined comparison value for the wear condition of the ionisation electrodes (20a, 20c), and a provisional maintenance date or cleaning date determined for the ionisation electrodes (20a, 20c) and or the ignition electrodes (20a, 20b) with the aid of the difference between the transmitted value and the stored comparison value.

8. Method according to one of the preceding claims, whereby
the burner (6) is operated at a reduced burner capacity and the ionisation current measured and compared with a comparison value, in particular at every switch-off of the burner (6).

9. Method according to one of the preceding claims, whereby
the burner (6) comprises a first ignition electrode (20a), in particular lying on an earth potential, and a second high-voltage carrying ignition electrode (20b), and whereby the ionisation electrodes (20a, 20c) comprise the first ignition electrode (20a) and a further measuring electrode (20c) for measuring the ionisation current, with which the measuring arrangement (30) is connected.

## Revendications

1. Procédé destiné à déterminer l'état d'entretien d'une installation chauffante (1), qui comprend un brûleur (6) destiné à la décomposition chimique de gaz dans une flamme, qui est surveillée par le biais d'un dispositif de sécurité (18) qui détecte le flux de courant entre deux électrodes d'ionisation (20a, 20c) alimentées par la flamme (14) et éteint le brûleur (6) en toute autonomie lorsque le flux de courant détecté se situe en dessous d'une valeur seuil prédéterminée, dans lequel le dispositif de sécurité (16) est commandé par le biais d'un dispositif de commande (22), lequel relie le dispositif de sécurité en vue de l'allumage du brûleur (6) à une source de courant électrique (19) et le sépare de celle-ci pour arrêter le brûleur (6), dans lequel
la liaison câblée électrique (23) entre l'une des électrodes d'ionisation (20c) et le dispositif de sécurité (16) est coupée pendant une durée prédéterminée avant la séparation du dispositif de sécurité (16) et de la source de courant électrique (19) et le flux de courant entre les électrodes d'ionisation (20a, 20c) est mesuré ultérieurement par le biais d'un montage de mesure électronique (30).

2. Procédé selon la revendication 1, dans lequel
la coupure de la liaison câblée électrique (23) entre le dispositif de sécurité (16) et l'une des électrodes d'ionisation (20c) et le raccordement du montage de mesure (30) aux électrodes d'ionisation (20c) intervient en l'espace d'une seconde après l'introduction d'un processus d'arrêt, conforme aux règles, du brûleur concerné (6).

3. Procédé selon la revendication 1 ou 2, dans lequel
la coupure de la liaison câblée électrique (23) entre le dispositif de sécurité (16) et l'une des électrodes d'ionisation (20c) et la séparation du dispositif de sécurité (16) et de la source de courant électrique (19) au cours d'une période prédéterminée est commandée par le biais du système de commande (22).

4. Procédé selon l'une des revendications 1 à 3, dans lequel
la séparation du dispositif de sécurité (16) et de la source de courant électrique (19) et le raccordement du montage de mesure (30) aux électrodes d'ionisation (20a, 20c) interviennent par le biais de la commutation d'un commutateur électrique, en particulier d'un relais (24).

5. Procédé selon l'une des revendications précédentes, dans lequel
la valeur pour le courant d'ionisation mesurée entre le raccordement du montage de mesure (30) aux électrodes d'ionisation (20a, 20c) et la séparation du dispositif de sécurité (16) et de l'alimentation en courant (19), en particulier en tant que valeur moyenne, est transmise à un dispositif de commande central (28).

6. Procédé selon la revendication 5, dans lequel
la valeur transmise au dispositif de commande central (28) pour le courant d'ionisation est restituée sur un écran en tant que valeur numérique absolue et/ou conjointement avec les valeurs précédemment transmises et mémorisées pour le courant d'ionisation.

7. Procédé selon la revendication 5, dans lequel
la valeur transmise au dispositif de commande central (28) pour le courant d'ionisation est comparée à une valeur de comparaison mémorisée, en particulier déterminée de manière empirique, pour l'état d'usure des électrodes d'ionisation (20a, 20c) et à l'aide de la différence entre la valeur transmise et la valeur de comparaison mémorisée une date d'entretien ou une date de nettoyage prévisionnelle est déterminée pour les électrodes d'ionisation (20a, 20c) et/ou des électrodes d'amorçage (20a, 20b).

8. Procédé selon l'une des revendications précédentes, dans lequel
le brûleur (6) est mis en service de manière modulée avec une puissance de brûleur réduite et le courant d'ionisation est mesuré en particulier lors de chaque arrêt du brûleur (6) et comparé à une valeur de comparaison.

9. Procédé selon l'une des revendications précédentes, dans lequel
le brûleur (6) présente une première électrode d'amorçage (20a) en particulier au potentiel de terre et une deuxième électrode d'amorçage (20b) sous haute tension, et en ce que les électrodes d'ionisation (20a, 20c) comprennent pour la mesure du courant d'ionisation la première électrode d'amorçage (20a) et une autre électrode de mesure (20c), auxquelles le montage de mesure (30) est relié.
